(19) **Europäisches Patentamt**

**European Patent Office**

**Office européen des brevets**

(11) **EP 0 975 444 B1**

(12) **EUROPEAN PATENT SPECIFICATION**

(45) Date of publication and mention
of the grant of the patent:
**27.10.2004 Bulletin 2004/44**

(21) Application number: **97938713.1**

(22) Date of filing: **04.09.1997**

(51) Int Cl.⁷: **B08B 9/04**

(86) International application number:
**PCT/CA1997/000626**

(87) International publication number:
**WO 1998/037990 (03.09.1998 Gazette 1998/35)**

(54) **SOFT CORE PIG**

MOLCH MIT DEFORMIERTEM KERN

RACLEUR A NOYAU DEFORMABLE

(84) Designated Contracting States:
**AT BE CH DE DK ES FI FR GB GR IE IT LI LU MC NL PT SE**

(30) Priority: **28.02.1997 US 807220**

(43) Date of publication of application:
**02.02.2000 Bulletin 2000/05**

(73) Proprietor: **Watts, Robert**
**Red Deer, Alberta T4N 6V1 (CA)**

(72) Inventor: **Watts, Robert**
**Red Deer, Alberta T4N 6V1 (CA)**

(74) Representative: **Jones, David Colin et al**
**Withers & Rogers,**
**Goldings House**
**2 Hays Lane**
**London SE1 2HW (GB)**

(56) References cited:
**EP-A- 0 286 320        WO-A-95/35172**
**US-A- 4 242 771**

- **PATENT ABSTRACTS OF JAPAN vol. 96, no. 10, 31 October 1996 -& JP 08 155413 A (YUNIPETSUKU KK), 18 June 1996,**

## Description

Over time the fluid carried within a pipe tends to coat the inner walls of the pipe. This coating reduces the cross-sectional area of the interior of the pipe, and reduces the fluid flow.

A standard method of cleaning a pipe is to drive a pipeline pig through the pipe using fluid pressure. Friction between the exterior of the pipeline pig and the interior surface of the pipe cleans and removes buildup from the pipe.

A typical problem with most pipe pigs is that they are unidirectional, i. e. they are suited for travel in only one direction. US-A-4,242,771 and EP-A-286 320 disclose such an unidirectional pig. As a result, it is not possible to run the pipeline pig back and forth through a limited length of pipe for extra cleaning; the entire pipe must therefore be re-cleaned. A few pipe pigs are spherical, and therefore suited for travel in any direction, but as a result of their shape have very little surface area to frictionally engage the interior surface of the pipe.

A further problem common to most pipeline pigs is that they do not navigate about bends and corners very well, and the potential for entrapping a pipeline pig within the pipe is quite high. GB-A-2286650 describes a bi-directional pig. However, there is still room for improvement because the pig is not designed to navigate corners and bends in either direction in a pipeline.

For the foregoing reasons there is a need for a pipeline pig that can be operated in either direction, that is rugged and durable, and that is suitable for navigating about corners and bends in pipelines.

The pipeline pig of the present invention provides some or all of the following structures.

(a) A bi-directional body, i.e. a body suitable for travel in either direction within a pipeline, having a plane of symmetry through the center thereof perpendicular to the length of the pig. Front and rear ends or noses on the body are generally hemispherical. A cylindrical middle portion of the body extending between the ends is adapted to provide sufficient surface area to seal against the inside surface of the pipeline, thereby allowing effective removal of buildup from that surface.

(b) A foam core, which is somewhat elongatable and compressible, and facilitates the deformation needed to allow the pig to negotiate corners. The foam core, property constructed, causes the body of the pig to elongate in restricted areas of the pipe where buildup is greater, and where needed to negotiate corners. In an example of a pig constructed in accordance with the preferred embodiment, a mixture of 130 grams of resin and 120-124 grams of ISO (polyisocyanate) is required for a pig having a 4 inch diameter. The resin and ISO combine to form a core having a superior combination of the ability to bias the external cover and associated studs against the interior surface of the pipe while also allowing the pig to elongate, where required to negotiate corners and areas of greater buildup within the pipe.

(c) An external cover having holes drilled for receiving a plurality of studs, arrayed over the middle portion of the body. In the preferred embodiment, the external cover is made of Uniroyal chemical VIBRATHANE 8083, which is abrasion resistant, sufficiently rigid to hold the studs in place and yet flexible enough to allow the pig to elongats to negotiate corners.

(d) A plurality of studs, carried by the cover, form an abrasive surface which scrapes the buildup from the sidewalls of the pipe.

It is therefore a primary object of the present invention to provide a novel pipe pig having a superior ability to negotiate curves and corners within a pipeline to be cleaned.

Another object of the present invention is the provision of a pipe pig that is better able to elongate in response to bends, curves and areas of extreme buildup within the pipeline, and yet which still provides adequate biasing pressure against the interior sidewalls of the pipe.

A still further object of the present invention is to provide a pipe pig that is suitable for use in a bi-directional manner, i.e. a pipe pig that can move in both directions within a pipe.

These and other features, aspects, and advantages of the present invention will become better understood with regard to the following description, appended claims, and accompanying drawings where:

FIG. 1 is a side orthographic view of a pipe pig constructed in accordance with the principles of the invention, having the core shown in dotted outline;
FIG. 2 is a cross-sectional view of the pipe pig of FIG. 1, taken along lines 2-2 of FIG. 1;
FIG. 3 is an enlarged, perspective view of one of the studs carried by the cover,
FIG. 4 is a partly sectioned view of a pipe carrying the pig of FIG 1;
FIG. 5 is a schematic, longitudinal, sectional view of a pipe having a series of right-angle turns illustrating movement of a pig through the pipe; and
FIG. 6 is a schematic, longitudinal, sectional view of a pipe with a rounded corner, illustrating elongation of a pig travelling therethrough.

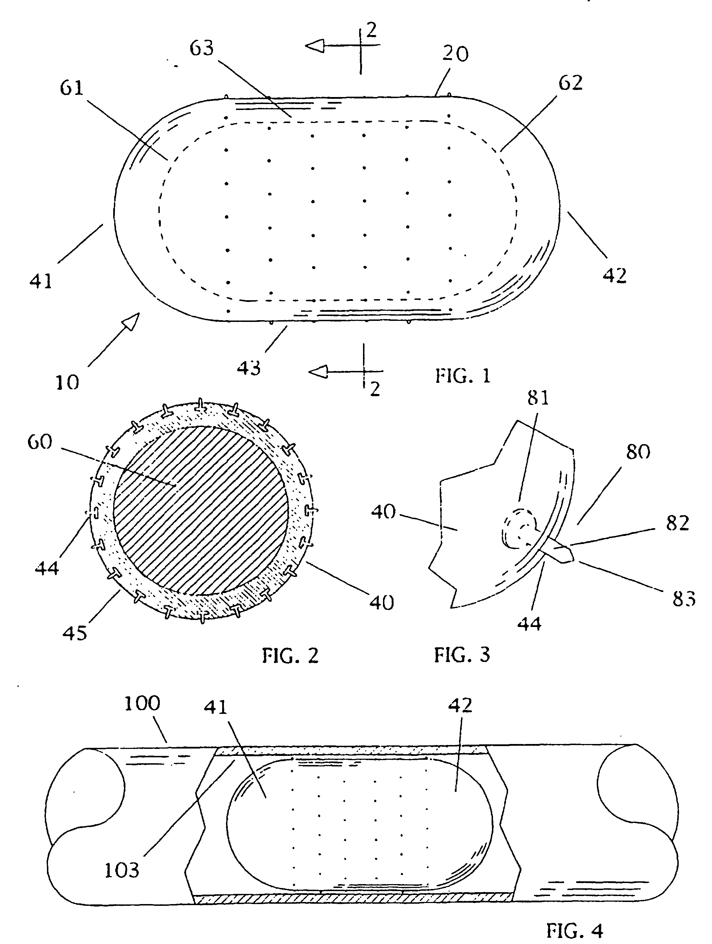

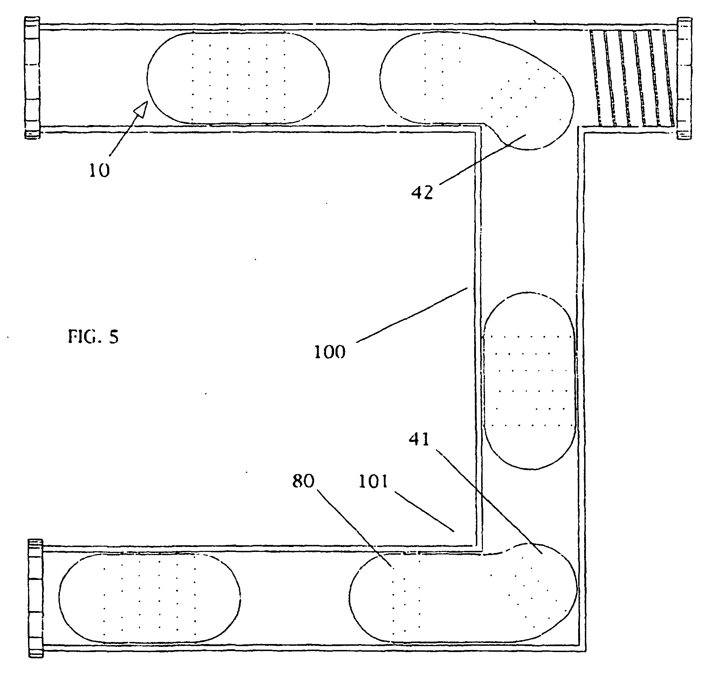

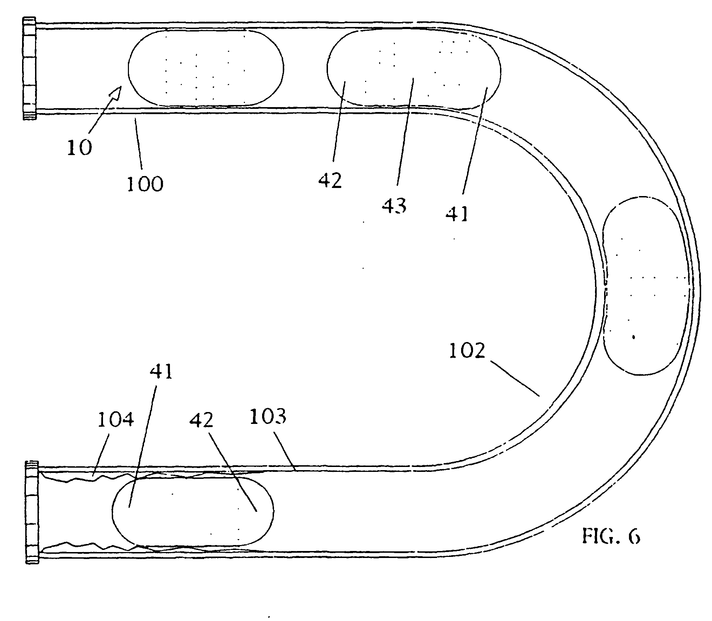

Referring in general to FIGS. 1 through 4, a pipeline pig 10 constructed in accordance with the principles of the invention is seen. FIGS. 5 and 6 illustrate a pipeline pig 10 bending, elongating and moving around curves and bends in a pipeline 100.

A bi-directional body 20 is formed from a core 60 that is optionally encased by a cover 40, which may optionally support a plurality of studs 80 typically arrayed about the cylindrical middle portion of the pig. The body is bi-directional in the sense that a plane of symmetry exists which is perpendicular to the length of the pig and the direction of the pig's travel within a pipeline.

Significantly, the bi-directional pig is not spherical. A spherical pig generally provides too little surface area in contact with the sidewalls of the interior of the pipe, and is therefore a less efficient cleaning tool. The pipeline pig 10 provides a cover having a cylindrical middle portion 43 and a core having a similar cylindrical portion 63. The cylindrical nature of the middle portion of the pig 10 allows sufficient contact with the interior surface 103 of a pipe 100 to adequately remove buildup 104.

Bluntly shaped forward and backward facing hemispherical noses are well suited to interact with the interior of a pipeline to reorient the pig 10 as it moves through bends and 90 degree turns within the pipeline. As the pig moves through straight sections of a pipeline, the cylindrical middle portions 43, 63 of the body are adjacent to the inside walls 103 of the pipeline, and are adapted to provide surface area to seal against and frictionally engage the inside surface of the pipeline, thereby removing buildup 104. As seen in FIG. 5, when the pig encounters a curve 102, bend or right angle turn 101, the front hemispherical nose 41, 61 contacts the interior surface 103 and applies an unsymmetrical force on the pig, causing it to turn.

FIG. 6 illustrates how a pig constructed in accordance with the disclosure elongates and bends to move through sections of the pipeline that bend, curve or are particularly narrowed due to buildup.

A compressible and elongatable core may be used alone as an economical pipe pig, or in conjunction with a cover to form a superior pipe pig having greater durability and a more abrasive surface which may be more effective in removing buildup 104 from the interior of the pipeline 100.

In a preferred version of the invention, a core suitable for use in producing an approximately 4" pig suitable for use in a 4" pipeline is manufactured as follows. First, resin is mixed for approximately 15 minutes. A preferred type of resin is BASF product number 2258242, although certain other resin products may be substituted. Second, ISO (isocyanate, also known as polymethylene or polyphenylisocyanate) is mixed for another 15 minutes. A preferred ISO is BASF product number 225841, although certain other ISO products may be substituted. Third, 130 grams of resin and 120-124 grams of ISO are mixed together for 4 minutes and then poured into a mold. The mold is then closed for a period of 10 minutes, after which the core is complete. The core may be used as a pipe pig with or without a cover, although use of the cover results in a superior pig.

As seen in FIG. 1, the core 60 provides front and rear hemispherical noses 61, 62, and a cylindrical middle portion 63.

A preferred version of the external cover 40 of the invention is made with urethane, or more specifically, Uniroyal chemical Vibrathane 8083. FIG. 2 illustrates in cross-section the relationship of the cover 40 to the studs 80 and the core 60. A mold supporting wire rods passing through the core is used to produce the cover. Such a mold allows the core to be supported in a manner that results in a cover that is of uniform thickness, typically 1/2".

The urethane is then poured into the mold. The mold is then heated to 250 degrees. The pig is then removed from the mold and placed in a curing oven for approximately 2 hours.

A pluralify of holes 44 may be drilled in the surface 45 of the pig. Typically, the holes are drilled in a regular array, as seen in FIG. 1, about the cylindrical middle portion 43. The holes should be slightly smaller than the actual size of the studs to be used, which are typically snow tire or similar studs.

The pig is then heated again to 250 degrees. After the pig reaches this temperature, studs are inserted with an air gun. In the preferred version, the tips 83 of the studs extend 1/16" past the external surface 45 of the urethane cover.

The front and rear semi-spherical noses 41, 42 are shaped in a manner that will cause the pig to turn or bend when a side of the nose hits a curve 102 or 90 degree bend 101 in the pipeline. As seen in FIG. 6, when one side of the nose contacts a curve in the pipeline, the pig bends somewhat in response. and the nose begins to point away from the obstruction, thereby turning the pig.

As seen particularly in FIGS. 2 and 3, a plurality of studs 80, each stud carried by a drilled hole, form an abrasive surface usable to scrape the buildup from the sidewalls of a pipe. In the preferred version of the invention, each stud provides a planar base 81, carried by a hole 44 external cover 40. and a cylindrical body 82, extending perpendicularly from the planar base, terminating in a pointed tip 83 which extends 1/16" past the surface 45 of the cover 40.

The invention resides not in any one of the above features per se, but rather in the particular combination of all of them herein disclosed and claimed and is distinguished from the prior art in this particular combination of all of its structures for the functions specified.

The bi-directional pipeline pig of the invention is used by inserting the pig into the pipeline, typically using a pig launcher at one end of the pipeline. Fluid is used to force the pig through the pipeline. The cylindrical middle portion 43 of the pig 10 and array of studs 80 make frictional contact with the interior surface of the pipeline and remove and clean that surface of waste, buildup and debris 104.

The pipeline pig 10 is well suited for negotiating corners within the pipeline. This is important, since without this ability, many pipelines could not be cleaned economically. The ability to negotiate corners is due in part to the interaction between the shape of the pig and the interior surface of the pipe. As seen in FIG. 5, when one side of the nose 41 of the front cover hits the side of the pipe due to a bend or corner, the pig tends to move in the opposite direction, thereby negotiating the bend or corner.

Another factor contributing to the pig's ability to negotiate bends and corners involves the nature of the material used to form the core 60 of the pig 10, which tends to elongate and narrow as the pig moves through bends, curves, corners and areas of heavy buildup.

The pipeline pig may be operated with pig launcher on each end of the pipeline, thereby allowing the pig to be reversed, if desired, to pass again through sections of pipe that are particularly narrowed by build-up. Generally, when the pressure of the fluid driving the pig drops, it is an indication that the pig is moving more rapidly due to lessened friction, and has just left an area of greater buildup. The direction of the pig may then be reversed by use of the alternate pig launcher, thereby causing it to travel again through the area of greater buildup. This is more efficient than redoing the entire pipeline, and is made possible by the bi-directional shape of the pig 10.

The previously described versions of the present invention have may advantages, including a primary advantage of providing a novel pipe pig having a superior ability to negotiate curves and corners within a pipeline to be cleaned.

Another advantage of the present invention is to provide a pipe pig that is better able to elongate in response to bends, curves and areas of extreme buildup within he pipeline, and yet which still provides adequate biasing pressure against the interior sidewalls of the pipe.

A still further advantage of the present invention is to provide a pipe pig that is suitable for use in a bi-directional manner, i.e. a pipe pig that can be operated in both directions within the pipe.

**Claims**

1.  A pipeline pig for scraping a build-up from the interior surface of a pipeline, the pipeline pig comprising a bi-directional body (20) having blunt, hemispherical front and rear noses (41, 42) and a cylindrical middle portion (43) extending between said front and rear noses (41, 42) providing surface area for sealing against the interior surface of a pipeline, and a plurality of studs (80) on said surface, thereby forming an abrasive surface for scraping the build-up from the interior surface of a pipe, **characterised in that** the bi-directional body (20) comprises

    (a) an elongatable and compressible core (60), formed from a mixture of resin and isocyanate;

and
    (b) an external cover (40) made of heat-treated urethane completely encasing the compressible and elongatable core, said studs (80) being carried by the external cover (40).

2.  The pipeline pig of claim 1, wherein each of the studs (80) comprises:

    a planar base (81), carried by the external cover (40); and
    a cylindrical body (82) perpendicular to the planar base (81) and
    terminating in a pointed tip (83).

3.  The pipeline pig, of claim 1 or claim 2, wherein the core (60) of the body (20) is formed of a ratio of 13 parts of resin to 12 parts isocyanate.

4.  The pipeline pig of any one of the preceding claims, wherein the studs (80) extend 1.6mm ($\frac{1}{16}$ inch) beyond the surface of the external cover (40).

**Patentansprüche**

1.  Rohrleitungsmolch zum Abschaben von Ablagerungen auf der Innenfläche einer Rohrleitung, wobei der Rohrleitungsmolch einen zweiseitig gerichteten Körper (20) aufweist, mit einem vorderen und einem hinteren stumpfen, halbkugelförmigen Ende (41, 42) und einem zylindrischen mittleren Bereich (43), der sich zwischen dem vorderen und dem hinteren Ende (41,42) erstreckt, womit eine Oberfläche bereitgestellt wird, die dicht gegen die Innenfläche einer Rohrleitung abschließt, und mehreren hervortretenden Elementen (80) auf der Oberfläche, womit eine rauhe Fläche gebildet wird, um die Ablagerung von der Innenfläche eines Rohrs abzukratzen,
    **dadurch gekennzeichnet,**
    **dass** der zweiseitig gerichtete Körper (20) aufweist

    (a) einen länglichen und kompressiblen Kern (60), der aus einer Mischung aus Harz und Isocyanat gebildet ist, und
    (b) eine äußere Hülle (40), die aus einem wärmbehandelten Urethan hergestellt ist und den kompressiblen und länglichen Kern vollständig umgibt, wobei die hervortretenden Elemente (80) von der äußeren Hülle (40) gehalten werden.

2.  Rohrleitungsmolch nach Anspruch 1, wobei jedes hervortretende Element (80) aufweist: eine planare Basis (81), die von der äußeren Hülle (40) gehalten wird, und einen zylindrischen Körper (82) senkrecht zur planaren Basis (81), der in einem spitzen Ende (83) endet.

**3.** Rohrleitungsmolch nach Anspruch 1 oder Anspruch 2, wobei der Kern (60) des Körpers (20) in einem Verhältnis von 13 Teilen Harz und 12 Teilen Isocyanat gebildet ist.

**4.** Rohrleitungsmolch nach einem der vorhergehenden Ansprüche, wobei die hervortretenden Elemente (80) 1,6 mm (1/16 inch) über die Oberfläche der äußeren Hülle (40) hinausragen.

**Revendications**

**1.** Racleur de conduite pour racler une montée de pression depuis la surface intérieure d'une conduite, le racleur de conduite comprenant un corps bi-directionnel (20) ayant des pointes arrondies, hémisphériques avant et arrière (41, 42) et une partie médiane cylindrique (43) s'étendant entre lesdites pointes avant et arrière (41, 42) fournissant une superficie d'étanchéité contre la surface intérieure d'une conduite, et une pluralité de goujons (80) sur ladite surface, formant ainsi une surface abrasive destinée à racler la montée de pression à partir de la surface intérieure d'un tuyau, **caractérisé en ce que** le corps bi-directionnel (20) comprend

(a) un noyau pouvant être allongé et compressible (60), composé d'un mélange de résine et d'isocyanate ; et
(b) un couvercle extérieur (40) composé d'uréthane traité thermiquement encastrant complètement le noyau compressible et pouvant être allongé, lesdits goujons (80) étant portés par le couvercle extérieur (40).

**2.** Racleur de conduite selon la revendication 1, dans lequel chacun des goujons (80) comprend :

une base plane (81) portée par le couvercle extérieur (40) ; et
un corps cylindrique (82) perpendiculaire à la base plane (81) et se terminant en une extrémité conique (83).

**3.** Racleur de conduite selon la revendication 1 ou 2, dans lequel le noyau (60) du corps (20) est composé d'un rapport de 13 parts de résine sur 12 parts d'isocyanate.

**4.** Racleur de conduite selon l'une quelconque des revendications précédentes, dans lequel les goujons (80) s'étendent de 1,6 mm (1/16ème de pouce) au-delà de la surface du couvercle extérieur (40).

FIG. 1

FIG. 2

FIG. 3

FIG. 4

FIG. 5

FIG. 6